(19) Europäisches Patentamt
European Patent Office
Office européen des brevets

(11) **EP 3 262 950 A1**

(12) **EUROPEAN PATENT APPLICATION**
published in accordance with Art. 153(4) EPC

(43) Date of publication:
**03.01.2018 Bulletin 2018/01**

(51) Int Cl.:
***A23G 1/00*** *(2006.01)*     ***A23D 9/00*** *(2006.01)*
***A23G 1/30*** *(2006.01)*

(21) Application number: **16755551.5**

(22) Date of filing: **24.02.2016**

(86) International application number:
**PCT/JP2016/055421**

(87) International publication number:
**WO 2016/136807 (01.09.2016 Gazette 2016/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.02.2015 JP 2015035956**

(71) Applicant: **The Nisshin OilliO Group, Ltd.**
**Tokyo 104-8285 (JP)**

(72) Inventors:
  • **OONISHI Kiyomi**
    **Yokosuka-shi**
    **Kanagawa 239-0832 (JP)**

  • **MURAYAMA Noriko**
    **Yokosuka-shi**
    **Kanagawa 239-0832 (JP)**
  • **TSUKIYAMA Muneo**
    **Yokosuka-shi**
    **Kanagawa 239-0832 (JP)**
  • **TAKEGUCHI Seiya**
    **Yokosuka-shi**
    **Kanagawa 239-0832 (JP)**
  • **UEHARA Hidetaka**
    **Yokosuka-shi**
    **Kanagawa 239-0832 (JP)**

(74) Representative: **Müller-Boré & Partner**
**Patentanwälte PartG mbB**
**Friedenheimer Brücke 21**
**80639 München (DE)**

(54) **POWDERED CHOCOLATE**

(57)     An object of the present invention is to provide a method for producing a powdered chocolate having a favorable flavor. Another object is to provide a powdered chocolate having a less oily taste, easy to eat, and also delicious even though the powdered chocolate has a high ratio (mass ratio) of a lipid to a total of a protein and a saccharide. The present invention is a powdered chocolate containing a fat and/or oil composition in a powder form satisfying the following condition (a). (a) The fat and/or oil composition contains: 65 to 99% by mass of a XXX triglyceride having fatty acid residues X, each with x carbon atoms, at positions 1 to 3; and 35 to 1% by mass of one or more types of X2Y triglycerides each having a fatty acid residue Y with y carbon atoms in place of one of the fatty acid residues X of the XXX triglyceride, provided that a total triglyceride content is 100% by mass, where x number of carbon atoms is an integer selected from 8 to 20, and y number of carbon atoms is each independently an integer selected from x+2 to x+12 and satisfying $y \leq 22$.

EP 3 262 950 A1

**Description**

Technical Field

The present invention relates to a powdered chocolate having a favorable flavor, a method for producing the powdered chocolate, and a food and a drink containing the powdered chocolate. Particularly, the present invention relates to a method for producing a powdered chocolate more easily than conventional methods. Further, the present invention also relates to a powdered chocolate having a less oily taste, easy to eat, and also delicious even though the powdered chocolate has a high ratio (mass ratio) of a lipid to a total of a protein and a saccharide.

Background Art

Powdered chocolates are widely used for, for example, decorations of breads and Western confectionery products, powdered drinks, processed cocoa powders, or the like. Moreover, because of the powder form, the area where such a powdered chocolate comes into contact with the tongue is large, and also the characteristic includes favorable melt-in-the-mouth and flavor. In addition, because of the ability to impart a flavor to various foods, powdered chocolates are increasingly employed for recent diversified, complex preferences of consumers.

Heretofore, several methods for producing a powdered chocolate have been known, but none of them enables easy productions . For example, there is known a method for producing a powdered chocolate, as follows. Specifically, a surfactant having an HLB of 8 to 18 in an amount of 0.2 to 1.0% is added to a chocolate mix having an oil content of 25 to 35%, and mixed together. Further, water is added to the mixture to form an emulsion such that the water content is 11 to 25% by weight. After that, the emulsion is dried at the product temperature of 90°C or lower, and then pulverized to obtain a powdered chocolate having a specific gravity of 0.35 to 0 . 55 and particle diameters of 5 mm or less (Patent Literature 1). Moreover, there is known a method for producing a powdered chocolate, in which a dextrin powder having a specific volume of 4 ml/g or more to 11 ml/g or less is cooled to the product temperature of 10 to -2 °C with cold air, while being rolled using a granulator or a mixer, to then coat sprayed particles of melted chocolate raw materials (Patent Literature 2) .

Both of these require complicated production steps and large production equipment. Particularly, since the pulverization, cooling, and so forth are involved, a considerable amount of energy is required. Hence, a method for more easily producing a powdered chocolate has been sought.

On the other hand, although there are various uses of powdered chocolates as described above, the use focusing on the nutritional composition is also conceivable; specifically, a higher lipid content than saccharide and protein contents. Recent Westernized diets and eating habits to satisfaction have brought about a problem of excessive carbohydrate (saccharide) intakes. Hence, low carbohydrate diets which restrict the intake amount of saccharides as much as possible have attracted attention. As a saccharide-restrictive diet, a "ketogenic diet" has been well known heretofore. A "ketogenic diet therapy" is a diet therapy utilizing the phenomenon that ketone bodies produced through lipid breakdown are used as an energy source of cells. The "ketogenic diet therapy" has been utilized so far to prevent obesity, reduce body weight, or suppress epileptic seizure, too.

Because of the higher lipid content than protein and saccharide contents, conventional "ketogenic diets" have problems of being oily, hard to eat, and not delicious. Hence, there are disadvantages in that consumers are not willing to eat ketogenic diets by themselves, or that a ketogenic diet therapy does not last for a long period, even if it is desirable to continue the therapy. For these reasons, various efforts have been made in conventional techniques targeting palatability and ease of eating. For example, there is proposed a ketogenic diet which contains proteins, lipids, and digestible carbohydrates, and which provides 2520 to 3080 kilojoules per 100 g dry mass. In the ketogenic diet, the weight amount of the lipids to the total of the proteins and the digestible carbohydrates is 2.7-3.4 to 1, and the lipids contain 16 to 40% by weight of polyunsaturated fatty acids, 25 to 48% by weight of monounsaturated fatty acids, and 23 to 50% by weight of saturated fatty acids, on fatty acid basis (Patent Literature 3) .

However, "a ketogenic diet" in which the lipid content is by far higher than the protein and saccharide contents can still be improved in terms of palatability and ease of eating. Accordingly, there have been demands for a ketogenic diet having a less oily taste, easy to eat, and also delicious.

Citation List

Patent Literatures

Patent Literature 1: Japanese Patent No. 3083967

Patent Literature 2: Japanese Patent No. 3817450
Patent Literature 3: Japanese Patent No. 5501764

Summary of Invention

Technical Problems

An object of the present invention is to provide a method for easily producing a powdered chocolate having a favorable flavor. Further, another object is to provide a powdered chocolate having a less oily taste, easy to eat, and also delicious even though the powdered chocolate has a high ratio (mass ratio) of a lipid to a total of a protein and a saccharide.

Solution to Problems

The present inventors have conducted intensive study on a method for producing a powdered chocolate having a favorable flavor. As a result, the inventors have found that the use of a powdered fat and/or oil composition satisfying a specific condition makes it possible to easily produce a powdered chocolate. This finding has led to the completion of the present invention. Further, as a result of intensive study on the usage of this powdered chocolate, the inventors have found that a powdered chocolate having a less oily taste, easy to eat, and also delicious is obtained by using the powdered fat and/or oil composition even though the ratio (mass ratio) of a lipid to a total of a protein and a saccharide is high. This finding has led to the completion of the present invention.

Specifically, one aspect of the present invention makes it possible to provide a powdered chocolate comprising a fat and/or oil composition in a powder form satisfying the following condition (a), wherein

(a) the fat and/or oil composition comprises:

65 to 99% by mass of a XXX triglyceride having fatty acid residues X, each with x carbon atoms, at positions 1 to 3; and
35 to 1% by mass of one or more types of X2Y triglycerides each having a fatty acid residue Y with y carbon atoms in place of one of the fatty acid residues X of the XXX triglyceride, provided that a total triglyceride content is 100% by mass,

x number of carbon atoms is an integer selected from 8 to 20, and
y number of carbon atoms is each independently an integer selected from $x+2$ to $x+12$ and satisfying $y \leq 22$.

Moreover, a preferable aspect of the present invention makes it possible to provide the powdered chocolate comprising:

80 to 99% by mass of the XXX triglyceride; and
20 to 1% by mass of the one or more types of X2Y triglycerides in total.

Moreover, a preferable aspect of the present invention makes it possible to provide the powdered chocolate, wherein
the x is an integer selected from 10 to 18, and
the y is each independently an integer selected from $x+2$ to $x+10$ and satisfying $y \leq 22$.

Moreover, a preferable aspect of the present invention makes it possible to provide the powdered chocolate, wherein
the x is an integer selected from 10 to 12, and
the y is each independently an integer selected from $x+4$ to $x+8$ and satisfying $y \leq 22$.

Moreover, a preferable aspect of the present invention makes it possible to provide the powdered chocolate, which has a loose bulk density of 0.1 to 0.6 g/cm$^3$.

Moreover, another aspect of the present invention makes it possible to provide the powdered chocolate, wherein

the powdered chocolate comprises a lipid, a protein, and a saccharide,
a ratio (mass ratio) of the lipid to a total of the protein and the saccharide is 2.0 or more, and
the fat and/or oil composition in the powder form satisfying the condition (a) is incorporated as the lipid and accounts for 50% by mass or more of the lipid.

Moreover, a preferable aspect of the present invention makes it possible to provide the powdered chocolate, wherein a total energy per 100 g (dry mass) of the powdered chocolate is 500 to 850 kilocalories.

Moreover, a preferable aspect of the present invention makes it possible to provide the powdered chocolate, wherein a ketone index (Woodyatt's formula) of the powdered chocolate is 1.0 to 4.0.

Moreover, a preferable aspect of the present invention makes it possible to provide the powdered chocolate comprising at least one flavoring substance selected from the group consisting of a cocoa powder, a matcha powder, and powdered milk.

Moreover, a preferable aspect of the present invention makes it possible to provide the powdered chocolate further comprising a flavoring and/or a sweetener.

Moreover, another aspect of the present invention makes it possible to provide a food or drink comprising the powdered chocolate.

Moreover, another aspect of the present invention makes it possible to provide a method for producing a powdered chocolate, comprising blending the fat and/or oil composition in the powder form as a raw material of a powdered chocolate.

Moreover, a preferable aspect of the present invention makes it possible to provide the method for producing a powdered chocolate, comprising blending the fat and/or oil composition in the powder form such that a content thereof in the powdered chocolate is 30 to 96% by mass relative to 100% by mass of the raw material.

Moreover, a preferable aspect of the present invention makes it possible to provide the method for producing a powdered chocolate, comprising blending at least one flavoring substance selected from the group consisting of a cocoa powder, a matcha powder, and powdered milk.

Moreover, a preferable aspect of the present invention makes it possible to provide the method for producing a powdered chocolate, further comprising blending a flavoring and/or a sweetener.

Advantageous Effects of Invention

The present invention makes it possible to easily produce a powdered chocolate by using a powdered fat and/or oil composition satisfying a specific condition, without using large equipment and complicated steps. Such a production method does not require the step that is performed at high energy costs for pulverization, cooling, and so forth, so that the production cost is greatly reduced, and the powdered chocolate can be produced at low cost.

Moreover, the use of the powdered fat and/or oil composition makes it possible to produce a powdered chocolate having a less oily taste, easy to eat, and also delicious even though the ratio (mass ratio) of the lipid to the total of the protein and the saccharide is high.

Further, the powdered chocolate using the powdered fat and/or oil composition has a unique cooling sensation and is a highly preferable powdered chocolate, which can suitably cope with, for example, a decrease in the demand in summer.

From the foregoing, it is possible to meet the demand of those who cannot be satisfied by conventional powdered chocolates or ketogenic diets.

Description of Embodiments

Hereinafter a "powdered chocolate" of the present invention will be described one by one.

<Powdered Chocolate>

In the present invention, a "powdered chocolate" is not limited to chocolates prepared in accordance with "Fair Competition Code concerning Labeling for Chocolates (Japan Fair Trade Commission Notification No. 16 of S46.3.29 (March 29, 1971), amended Notification No. 18 of H2.6.22 (June 22, 1990)) " or other legal regulations, and has a wide concept referring to all powdered products of what is called normal chocolates and the like containing cacao mass, cocoa butter, a cocoa butter substitute, or the like. Note that the term "powdered" in the "powdered chocolate" refers to having an average particle diameter of 100 $\mu$m or less. The average particle diameter is more preferably 50 $\mu$m or less, and the average particle diameter is furthermore preferably 30 $\mu$m or less. Note that the term average particle diameter herein is a value measured according to laser diffraction/scattering methods (IS0133201 and IS09276-1) .

<Fat and/or Oil Composition>

The present invention relates to a fat and/or oil composition containing: 65 to 99% by mass of at least one type of a XXX triglyceride having fatty acid residues X, each with x carbon atoms, at positions 1 to 3; and 35 to 1% by mass of one or more types of X2Y triglycerides each having a fatty acid residue Y with y carbon atoms in place of one of the fatty acid residues X of the XXX triglyceride, provided that a total triglyceride content is 100% by mass. In the fat and/or oil composition, x number of carbon atoms is an integer selected from 8 to 20, and y number of carbon atoms is each independently an integer selected from x+2 to x+12 and selected from a condition satisfying $y \leq 22$. The fat and/or oil composition containing the two types of the triglycerides in the above-described % by mass easily forms a fat and/or oil, composition in a powder form without incorporating an additive such as an emulsifier or an excipient. The fat and/or oil composition and the powdered fat and/or oil composition of the present invention have been described in detail in PCT/JP2015/070850 (Japanese Patent Application No. 2014-149168) already filed. Accordingly, the detail will be omitted here. Note that the content of this application is incorporated herein. Hereinafter, characteristics of the fat and/or oil composition and the powdered fat and/or oil composition of the present invention will be summarized and described.

<XXX Triglyceride>

The fat and/or oil composition of the present invention contains a single type or multiple types, preferably a single type (one type), of the XXX triglyceride whose content is 65 to 99% by mass provided that a total triglyceride content is 100% by mass. The XXX triglyceride is a triglyceride having fatty acid residues X, each with x carbon atoms, at positions 1 to 3, and each of the fatty acid residues X is the same as the others. Herein, x number of carbon atoms is an integer selected from 8 to 20, preferably an integer selected from 10 to 18, more preferably an integer selected from 10 to 16, and furthermore preferably an integer selected from 10 to 12.

The fatty acid residues X may be saturated or unsaturated fatty acid residues. Specific examples of the fatty acid residues X include residues such as caprylic acid, capric acid, lauric acid, myristic acid, palmitic acid, stearic acid, and arachidic acid, but are not limited thereto. The fatty acids are more preferably capric acid, lauric acid, myristic acid, palmitic acid, and stearic acid, furthermore preferably capric acid, lauric acid, myristic acid, and palmitic acid, and still furthermore preferably capric acid and lauric acid.

The content of the XXX triglyceride is 65 to 99% by mass relative to 100% by mass of all triglycerides in the fat and/or oil composition. The content of the XXX triglyceride is preferably 75 to 99% by mass, more preferably 80 to 99% by mass, furthermore preferably 83 to 98% by mass, particularly preferably 85 to 98% by mass, and still furthermore preferably 90 to 98% by mass.

<X2Y Triglyceride>

The fat and/or oil composition of the present invention contains one or more types of the X2Y triglycerides each having a fatty acid residue Y with y carbon atoms in place of one of the fatty acid residues X of the XXX triglyceride. Herein, each of the fatty acid residues X contained in one X2Y triglyceride is the same as the other, and is also the same as the fatty acid residues X of the XXX triglyceride. The y number of carbon atoms of the fatty acid residue Y contained in the one X2Y triglyceride is an integer selected from x+2 to x+12 under a condition satisfying $y \leq 22$. The y number of carbon atoms is an integer selected from a condition preferably satisfying y = x+2 to x+10, more preferably satisfying y = x+4 to x+8. Moreover, the upper limit value of the y number of carbon atoms is preferably $y \leq 20$, more preferably $y \leq 18$. The fat and/or oil composition of the present invention may contain multiple, for example, two types to five types, preferably three or four types, of the X2Y triglycerides. In such cases, the definition of each of the X2Y triglycerides is as described above. The y number of carbon atoms of the fatty acid residue Y of each X2Y triglyceride is selected within the above-described range independently from the other X2Y triglyceride. For example, in a case where the fat and/or oil composition of the present invention is produced by interesterifying tricaprin and a highly hydrogenated oil of palm kernel stearin, the composition contains four types of the X2Y triglycerides in which all the x's satisfy x = 10, while y's satisfy y = 12, 14, 16, and 18, respectively.

The fatty acid residue Y may be a saturated or unsaturated fatty acid residue. Specific examples of the fatty acid residue Y include residues such as lauric acid, myristic acid, palmitic acid, stearic acid, arachidic acid, and behenic acid, but are not limited thereto. The fatty acid is more preferably myristic acid, palmitic acid, stearic acid, arachidic acid, and behenic acid, and furthermore preferably myristic acid, palmitic acid, and stearic acid.

The fatty acid residue Y of the X2Y triglyceride may be located at any one of positions 1 to 3 thereof.

The content of the X2Y triglycerides is 35 to 1% by mass relative to 100% by mass of all the triglycerides in the fat and/or oil composition. The content of the X2Y triglycerides is, for example, 25 to 1% by mass, preferably 20 to 1% by mass, more preferably 17 to 1% by mass, furthermore preferably 15 to 2% by mass, and still furthermore preferably 10 to 2% by mass. In the case where the fat and/or oil composition of the present invention contains multiple X2Y triglycerides, the amount of the X2Y triglycerides is a total amount of the X2Y triglycerides contained.

<Other Triglycerides>

The fat and/or oil composition of the present invention may contain other triglycerides than the above-described XXX triglyceride and X2Y triglycerides, as long as the effects of the present invention are not impaired. The other triglycerides may be multiple types of triglycerides, or may be synthetic fats and/or oils or natural fats and/or oils. The synthetic fats and/or oils include glyceryl tricaprylate, glyceryl tricaprate, and the like. Examples of the natural fats and/or oils include cocoa butter, sunflower seed oil, rapeseed oil, soybean oil, cottonseed oil, and the like. The other triglycerides may be contained in an amount of 1% by mass or more, for example, approximately 5 to 30% by mass, relative to 100% by mass of all the triglycerides in the fat and/or oil composition of the present invention without problems. The content of the other triglycerides is, for example, 0 to 30% by mass, preferably 0 to 18% by mass, more preferably 0 to 15% by mass, and furthermore preferably 0 to 8% by mass.

<Other Ingredients>

The fat and/or oil composition of the present invention may optionally contain ingredients, such as an emulsifier, a flavoring, a skim milk powder, a whole milk powder, a cocoa powder, sugar, and dextrin, other than the above-described triglycerides. The amount of these other ingredients can be any amount, as long as the effects of the present invention are not impaired. For example, the amount is 0 to 70% by mass, preferably 0 to 65% by mass, and more preferably 0 to 30% by mass, provided that a total mass of the fat and/or oil composition is 100% by mass. Preferably, 90% by mass or more of the other ingredients are a powder having an average particle diameter of 1000 $\mu$m or less, and more preferably a powder having an average particle diameter of 500 $\mu$m or less. Note that the term average particle diameter herein is a value measured according to laser diffraction/scattering methods (IS0133201 and IS09276-1).

However, a preferable fat and/or oil composition of the present invention is preferably substantially constituted only of a fat and/or oil. Herein, the fat and/or oil is substantially constituted only of triglycerides. Moreover, the term "substantially" means that the content of an ingredient (s) other than the fat and/or oil incorporated in the fat and/or oil composition or of an ingredient (s) other than the triglycerides incorporated in the fat and/or oil is, for example, 0 to 15% by mass, preferably 0 to 10% by mass, and more preferably 0 to 5% by mass, relative to 100% by mass of the fat and/or oil composition or the fat and/or oil.

<Powdered Fat and/or Oil Composition>

The powdered fat and/or oil composition of the present invention can be obtained by melting the triglycerides incorporated in the above-described fat and/or oil composition to obtain the fat and/or oil composition in a molten state, and cooling this fat and/or oil composition, so that a fat and/or oil composition in a powder form (powdered fat and/or oil composition) is obtained without adopting special processing means such as spraying and mechanical pulverization with a pulverizer such as a mill. More specifically, the fat and/or oil composition containing the XXX triglyceride and the X2Y triglycerides is optionally heated and melted, and a fat and/or oil composition in a molten state thus obtained is then cooled to form a solid having voids with a larger volume than the fat and/or oil composition in the molten state. The obtained solid is pulverized (loosened) by adding a light impact from the outside, for example, by sieving. In this manner, a powdered fat and/or oil composition can be obtained easily.

<Physical Properties of Powdered Fat and/or Oil Composition>

The powdered fat and/or oil composition of the present invention is a powdered solid at room temperature (20°C).
The powdered fat and/or oil composition of the present invention, for example, if substantially constituted only of a fat and/or oil, has a loose bulk density of 0.1 to 0.6 g/cm$^3$, preferably 0.15 to 0.5 g/cm$^3$, and more preferably 0.2 to 0.4 g/cm$^3$. Herein, a "loose bulk density" refers to a packing density determined by letting a powder naturally fall. A loose bulk density (g/cm$^3$) is measured, for example, by: letting an appropriate amount of a powdered fat and/or oil composition fall approximately 2 cm above an upper opening end of a graduated cylinder with an inner diameter 15 mm $\times$ 25 mL to loosely fill the graduated cylinder; measuring a mass (g) and reading a volume (mL) thus filled; and calculating a mass (g) of the powdered fat and/or oil composition per mL to determine the loose bulk density. Alternatively, a loose bulk density can also be calculated from a bulk specific gravity measured based on JIS K-6720 (or ISO 1060-1 and 2) by using a bulk specific gravity measuring device manufactured by Kuramochi Kagaku Kikai Seisakusho Co. Specifically, 120 mL of a sample is let fall toward a receiver (a 100-mL cylindrical container with an inner diameter of 40 mm $\times$ a height of 85 mm) from a height position 38 mm above an upper opening of the receiver. The sample protruding from the receiver is slid off, and a mass (A g) of the sample corresponding to the internal capacity (100 mL) of the receiver is weighed, so that a loose bulk density can be determined from the following formula.

$$\texttt{Loose bulk density (g/mL) = A (g)/100 (mL)}$$

The measurement is preferably repeated three times to obtain the average.

<Method for Producing Powdered Fat and/or Oil Composition>

The powdered fat and/or oil composition of the present invention can be produced by a method including the following steps of:

(a) preparing a fat and/or oil composition containing 65 to 99% by mass of a XXX triglyceride having fatty acid residues X, each with x carbon atoms, at positions 1 to 3, and 35 to 1% by mass of X2Y triglycerides each having a fatty acid residue Y with y carbon atoms in place of one of the fatty acid residues X of the XXX triglyceride, provided that a total triglyceride content is 100% by mass, where x number of carbon atoms is an integer selected from 8 to 20, and y number of carbon atoms is each independently an integer selected from x+2 to x+12 and satisfying $y \leq 22$;
(b) optionally heating the fat and/or oil composition to melt the triglycerides incorporated in the fat and/or oil composition, thereby obtaining the fat and/or oil composition in the molten state; and
(d) cooling the fat and/or oil composition in the molten state to obtain a powdered fat and/or oil composition.

Additionally, the method may include, as step (c), an optional step(s) for promoting the powder formation, for example, a seeding step (c1), a tempering step (c2), and/or a pre-cooling step (c3), between steps (b) and (d). Further, the powdered fat and/or oil composition obtained in step (d) may be a fat and/or oil composition in a powder form obtained by step (e) of pulverizing a solid obtained after the cooling in step (d).

(a) Fat and/or Oil Composition Preparation Step I

The fat and/or oil composition prepared in step (a) contains a XXX triglyceride (at least one type) and a X2Y triglyceride (at least one type) in the above-described % by mass. Specifically, for example, the fat and/or oil composition is obtained through steps of: separately preparing and mixing a XXX triglyceride (at least one type) having fatty acid residues X, each with x carbon atoms, at positions 1 to 3 and a YYY triglyceride (at least one type) having fatty acid residues Y, each with y carbon atoms, at positions 1 to 3 at a mass ratio of XXX triglyceride/YYY triglyceride being 90/10 to 99/1 to obtain a reaction substrate (herein, x number of carbon atoms is an integer selected from 8 to 20, and y number of carbon atoms is an integer selected from x+2 to x+12 and satisfying $y \leq 22$) ; and heating the reaction substrate, followed by an interesterification in the presence of a catalyst.

(a) Fat and/or Oil Composition Preparation Step II

The method for producing the fat and/or oil composition prepared in step (a) of the present invention further includes a method in which a XXX triglyceride and a X2Y triglyceride are simultaneously and directly synthesized as described below. Specifically, to obtain a XXX triglyceride and a X2Y triglyceride in this preparation step II, a XXX triglyceride and a YYY triglyceride are not separately synthesized for the interesterification, but raw materials (fatty acids or fatty acid derivatives and glycerin) for producing both of the triglycerides are introduced into, for example, a single reaction vessel to simultaneously and directly synthesize the triglycerides.

(a) Fat and/or Oil Composition Preparation Step III

Further, the fat and/or oil composition may be obtained as the fat and/or oil composition containing 65 to 99% by mass of the XXX triglyceride and 35 to 1% by mass of the X2Y triglyceride by: preparing a fat and/or oil composition containing the XXX triglyceride outside the range of 65 to 99% by mass and/or the X2Y triglyceride outside the range of 35 to 1% by mass; and then further adding the XXX triglyceride or the X2Y triglyceride (preparation of the fat and/or oil composition by dilution) . For example, after a fat and/or oil composition containing 50 to 70% by mass of the XXX triglyceride and 50 to 30% by mass of the X2Y triglyceride is obtained, a desired amount of the XXX triglyceride may be added to obtain the fat and/or oil composition containing 65 to 99% by mass of the XXX triglyceride and 35 to 1% by mass of the X2Y triglyceride.

(b) Step of Obtaining the Fat and/or Oil Composition in Molten State

Before step (d), if the fat and/or oil composition obtained in step (a) is in a molten state when prepared, the fat and/or oil composition is directly cooled without heating. Meanwhile, if the fat and/or oil composition is not in a molten state when obtained, the fat and/or oil composition is optionally heated to melt the triglycerides incorporated in the fat and/or oil composition, so that the fat and/or oil composition in the molten state is obtained.
Herein, it is appropriate to heat the fat and/or oil composition at a temperature not lower than melting points of the triglycerides incorporated in the fat and/or oil composition, particularly at a temperature at which the XXX triglyceride and the X2Y triglyceride can be melted, for example, 70 to 200°C, preferably 75 to 150°C, and more preferably 80 to 100 °C. Moreover, it is appropriate to continue the heating for, for example, 0.5 to 3 hours, preferably 0.5 to 2 hours, and more preferably 0.5 to 1 hour.

(d) Step of Cooling Fat and/or Oil Composition in Molten State to Obtain Powdered Fat and/or Oil Composition

Further, the fat and/or oil composition in the molten state obtained in step (a) or (b) is cooled to form a powdered fat and/or oil composition.

Herein, "cooling the fat and/or oil composition in the molten state" and similar phrases mean keeping the fat and/or oil composition in the molten state at a temperature lower than the melting point of the fat and/or oil composition. The "temperature lower than the melting point of the fat and/or oil composition" is, for example, a temperature lower by 1 to 30°C than the melting point, preferably a temperature lower by 1 to 20°C than the melting point, and more preferably a temperature lower by 1 to 15°C than the melting point. The cooling of the fat and/or oil composition in the molten state is performed, for example, when x is 8 to 10, such that the cooling makes the final temperature reach a temperature of preferably 10 to 30°C, more preferably 15 to 25°C, and furthermore preferably 18 to 22°C. The final temperature in the cooling is, for example, when x is 11 or 12, preferably 30 to 40°C, more preferably 32 to 38°C, and furthermore preferably 33 to 37°C; when x is 13 or 14, preferably 40 to 50°C, more preferably 42 to 48°C, and furthermore preferably 44 to 47°C; when x is 15 or 16, preferably 50 to 60°C, more preferably 52 to 58°C, and furthermore preferably 54 to 57°C; when x is 17 or 18, preferably 60 to 70°C, more preferably 62 to 68°C, and furthermore preferably 64 to 67°C; when x is 19 or 20, preferably 70 to 80°C, more preferably 72 to 78°C, and furthermore preferably 74 to 77°C. At the above-described final temperatures, it is appropriate to leave standing the fat and/or oil composition in the molten state for, for example, preferably 2 hours or longer, more preferably 4 hours or longer, and furthermore preferably 6 hours to 2 days. In some cases, for example, if it takes time for powdering relatively as in a case where x number of carbon atoms of the fatty acid residues X of the XXX triglyceride is 8 to 12, particularly in a case where the following step (c) is not adopted, the fat and/or oil composition in the molten state may have to be left standing for, for example, 2 to 8 days, specifically 3 to 7 days, and more specifically approximately 6 days.

(c) Step of Promoting Powder Formation

Further, as the optional step (c) for promoting the powder formation between steps (a) or (b) and (d), the fat and/or oil composition in the molten state to be used in step (d) may be treated by a seeding process (c1), a tempering process (c2), and/or a pre-cooling process (c3).

Herein, the seeding process is a method for promoting powdering by adding a small amount of an ingredient, which serves as a powder core (seed), during the cooling of the fat and/or oil composition in the molten state. Specifically, for example, targeting the fat and/or oil composition in the molten state obtained in step (b), a fat and/or oil powder containing preferably 80% by mass or more, more preferably 90% by mass or more, of a XXX triglyceride with the same number of carbon atoms as the XXX triglyceride in the fat and/or oil composition is prepared as the ingredient which serves as the core (seed). This fat and/or oil powder serving as the core is added in an amount of 0.1 to 1 part by mass, preferably 0.2 to 0.8 parts by mass, to 100 parts by mass of the fat and/or oil composition in the molten state when the temperature of the fat and/or oil composition reaches a temperature of, for example, the final cooling temperature ±0 to +10°C, preferably +5 to +10°C, during the cooling of the fat and/or oil composition in the molten state. In this manner, this method promotes powdering of the fat and/or oil composition.

The tempering process is a method for promoting powdering of the fat and/or oil composition by one-time cooling before the fat and/or oil composition in the molten state is left standing at the final cooling temperature in cooling the fat and/or oil composition. In this process, the fat and/or oil composition in the molten state is cooled to a temperature lower than the cooling temperature in step (d), for example, a temperature lower by 5 to 20°C, preferably a temperature lower by 7 to 15°C, and more preferably a temperature lower by approximately 10°C, for preferably 10 to 120 minutes, more preferably approximately 30 to 90 minutes.

The pre-cooling process (c3) is a method for temporarily pre-cooling, before the cooling in step (d), the fat and/or oil composition in the molten state obtained in step (a) or (b) at a temperature lower than the temperature for the molten state in step (a) or (b) but higher than the cooling temperature in step (d). The temperature higher than the cooling temperature in step (d) may be, for example, a temperature higher by 2 to 40°C than the cooling temperature in step (d), preferably a temperature higher by 3 to 30°C, more preferably a temperature higher by 4 to 30°C, and furthermore preferably a temperature higher by approximately 5 to 10°C. Setting a lower temperature for the pre-cooling makes it possible to further shorten the cooling time at the cooling temperature in step (d). Thus, unlike the seeding process and the tempering process, the pre-cooling process is a method for allowing the promotion of powdering of the fat and/or oil composition only by decreasing the cooling temperature stepwise, and has a great advantage in industrial production.

(e) Step of Pulverizing Solid to Obtain Powdered Fat and/or Oil Composition

Step (d) of obtaining the powdered fat and/or oil composition by cooling described above may be performed, more specifically, by step (e) of pulverizing a solid resulting from the cooling in step (d) to obtain a powdered fat and/or oil composition.

The detail will be described. First, the fat and/or oil composition containing the XXX triglyceride and the X2Y triglyceride is melted, and a fat and/or oil composition is thus obtained in a molten state and then cooled to form a solid having voids with a larger volume than the fat and/or oil composition in the molten state. The fat and/or oil composition in the form of solid having voids can be pulverized by adding a light impact, so that the solid easily collapses into a powder form.

Herein, the means for adding a light impact is not particularly specified. For example, a pulverization (loosening) method by gently vibrating (applying an impact to) the solid by shaking, sieving, or the like is simple and preferable.

<Other Ingredients Incorporated in Powdered Fat and/or Oil Composition>

The powdered fat and/or oil composition of the present invention may optionally contain other ingredients such as an emulsifier, a protein, a starch, and an antioxidant. For example, adding an ingredient having an emulsification action to the powdered fat and/or oil composition makes it possible to enhance the dispersibility of the powdered fat and/or oil composition into an aqueous system. The amount of these other ingredients can be any amount, as long as the effects of the present invention are not impaired. For example, the amount is 0 to 70% by mass, preferably 0 to 65% by mass, and more preferably 0 to 30% by mass, provided that a total mass of the powdered fat and/or oil composition is 100% by mass.

However, a preferable powdered fat and/or oil composition of the present invention is preferably substantially constituted only of a fat and/or oil. Herein, the fat and/or oil is substantially constituted only of triglycerides. Moreover, the term "substantially" means that the content of an ingredient (s) other than the fat and/or oil incorporated in the powdered fat and/or oil composition or of an ingredient (s) other than the triglycerides incorporated in the fat and/or oil is, for example, 0 to 15% by mass, preferably 0 to 10% by mass, and more preferably 0 to 5% by mass, relative to 100% by mass of the fat and/or oil composition or the fat and/or oil.

<Content of Powdered Fat and/or Oil Composition>

The powdered fat and/or oil composition of the present invention can be optionally incorporated as a raw material of a powdered chocolate. For example, the powdered fat and/or oil composition of the present invention is preferably incorporated such that the content in the powdered chocolate is 30 to 96% by mass relative to 100% by mass of a finally obtained powdered chocolate containing the powdered fat and/or oil composition of the present invention. Moreover, the content is preferably 40 to 90% by mass, and furthermore preferably 50 to 80% by mass. To bring about a favorable powdered chocolate flavor, it is appropriate to incorporate a flavoring substance and so forth to be described later in an amount of at least 4 % by mass. Hence, the upper limit of the content of the powdered fat and/or oil composition of the present invention is preferably 96% by mass. Further, a favorable powdered chocolate can be obtained with 30% by mass or more of the powdered fat and/or oil composition of the present invention.

In addition, in a case where the ratio (mass ratio) of a lipid to a total of a protein and a saccharide is 2.0 or more, the present invention can normally be utilized as a ketogenic diet. In this case, the powdered fat and/or oil composition of the present invention is preferably incorporated and accounts for 50% by mass or more of the lipid. With 50% by mass or more of the powdered fat and/or oil composition relative to the lipid, it is possible to obtain such effects as no oily taste, ease of eating, and also being delicious. The powdered fat and/or oil composition of the present invention should be incorporated and account for more preferably 60% by mass or more of the lipid, and furthermore preferably 70% by mass or more of the lipid.

<Blending Ratio of Lipid, Protein, and Saccharide in Powdered Chocolate>

In the present invention, the "powdered chocolate" preferably contains, in a final product, 30 to 99% by mass of the lipid, 0 to 40% by mass of the protein, and 1 to 30% by mass of the saccharide; more preferably 40 to 95% by mass of the lipid, 0 to 35% by mass of the protein, and 5 to 25% by mass of the saccharide; and furthermore preferably 55 to 95% by mass of the lipid, 0 to 25% by mass of the protein, and 5 to 20% by mass of the saccharide. Note that these numerical values of % by mass are based on 100% by mass (dry mass) of the powdered chocolate in the final product.

<Energy of Powdered Chocolate>

The "powdered chocolate" of the present invention preferably has a relatively high energy so that a necessary energy can be conveniently taken in in a large amount. Specifically, the energy thereof is 500 to 850 kilocalories per 100 g of the powdered chocolate. Preferably, the energy is 600 to 800 kilocalories per 100 g of the powdered chocolate. Furthermore preferably, the energy is 700 to 800 kilocalories per 100 g of the powdered chocolate.

<Ketone Ratio of Powdered Chocolate>

To utilize the "powdered chocolate" of the present invention as a ketogenic diet, the ratio (mass ratio) of the lipid (hereinafter also referred to as "F") to the total of the protein (hereinafter also referred to as "P") and the saccharide (hereinafter also referred to as "C") (i.e., F/(P+C) . Herein, this will be hereinafter referred to as "ketone ratio") is preferably 2.0 or more. Specifically, the ketone ratio is 2.0 to 6.0. Preferably, the ketone ratio is 3.0 to 5.5. Furthermore preferably, the ketone ratio is 4.0 to 5.0. Generally, the higher the ketone ratio, the more effective. Nevertheless, taking into consideration that a ketogenic diet is long continued, it is effective to start the diet with a ketone ratio of 2.0 or more. If a higher effect is desired, the ketone ratio is more preferably 3 . 0 or more, and furthermore preferably 4.0 or more. On the other hand, the ketone ratio of 6.0 or less is preferable because the diet can be eaten without any difficulty.

<Ketone Index of Powdered Chocolate>

By the way, in a case where the lipid content is high and the carbohydrate (saccharide) content is low, ketone bodies are consumed as energy. Hence, a lipid is called a ketogenic substance (K), whereas a carbohydrate (saccharide) is called an anti-ketogenic substance (AK) in some cases ("Book of Ketogenic Diet" written by Hiroshi Maruyama et al., Dai-Ichi Shuppan Co., Ltd., 2010, on page 4). Moreover, a lipid (fat) contains 90% by mass of K and 10% by mass of AK, while a protein contains 46% by mass of K and 58% by mass of AK (supra).

Accordingly, a ratio (mass ratio) of an anti-ketogenic substance (AK) to a ketogenic substance (K) (herein, this will be hereinafter referred to as "ketone index") calculated according to the following formula indicates an efficacy as a ketogenic diet (supra).

$$K/AK = (0.9F + 0.46P)/(C + 0.1F + 0.58P)$$

Note that this formula is called "Woodyatt's formula."

In the present invention, the ketone index is preferably 1.0 to 4.0, more preferably 2.0 to 3.5, and furthermore preferably 2.5 to 3.5. Note that, generally, the higher the ketone index, the more effective. Nevertheless, taking into consideration that a ketogenic diet is long continued, it is effective to start the diet with a ketone ratio of 1.0 or more. Moreover, since it is said that ketone bodies are produced *in vivo* with a ketone index of more than 2.0 (supra), the ketone index is more preferably 2.0 or more, and furthermore preferably 2.5 or more. On the other hand, the ketone index of 4.0 or less is preferable because the diet can be eaten without any difficulty.

<Flavoring Substance Incorporated in Powdered Chocolate>

As the "flavoring substance" of the present invention, any flavoring substance can be used without particular limitations, as long as it can be powdered. Examples thereof include a cocoa powder, a matcha powder, a vanilla powder, a strawberry powder, a banana powder, a mango powder, a coffee powder, powdered milk (such as whole milk, skim milk, processed milk), a whey powder, a butter milk powder, a curry powder, and the like. One or at least two of these can be used. Particularly, in the present invention, it is preferable to use at least one flavoring substance selected from the group consisting of a cocoa powder, a matcha powder, and powdered milk.

The content of the flavoring substance in the powdered chocolate is preferably 3 to 50% by mass, more preferably 5 to 40% by mass, and furthermore preferably 7 to 30% by mass, provided that a total mass of the finally obtained powdered chocolate containing the powdered fat and/or oil composition of the present invention is 100% by mass.

<Lipid Incorporated in Powdered Chocolate>

The powdered chocolate of the present invention can optionally contain another lipid in addition to the powdered fat and/or oil composition. As the lipid, an edible fat and/or oil is particularly preferable. Examples of such an edible fat and/or oil include edible oils, margarines, fat spreads, shortenings, and the like. One or a combination of at least two of these can be used. These edible fats and/or oils are preferably processed into a powder form. As raw materials of the edible fats and/or oils, it is possible to use, for example, coconut oil, palm kernel oil, palm oil, palm fractionated oil (such as palm olein or palm super olein), shea butter, fractionated shea butter, sal fat, fractioned sal fat, illipe butter, soybean oil, rapeseed oil, cottonseed oil, safflower oil, sunflower seed oil, rice oil, corn oil, sesame oil, olive oil, milk fat, cocoa butter, or the like, a fat and/or oil mixture thereof, a processed fat and/or oil thereof, or the like.

The content of the another lipid in the powdered chocolate is preferably 0 to 100% by mass, more preferably 0 to 75% by mass, and furthermore preferably 0 to 50% by mass, relative to 100% by mass of the powdered fat and/or oil composition.

Note that, in the present invention, in a case where the ketone ratio and ketone index described above are calculated, lipids derived from the raw materials other than the aforementioned lipid to be blended are also included in the calculation. For example, in the case where a cocoa powder is blended into the powdered chocolate, since the lipid content in the cocoa powder is approximately 11% by mass, a lipid corresponding to this is incorporated into the powdered chocolate. Moreover, in the case where a matcha powder is blended into the powdered chocolate, since the lipid content in the matcha powder is approximately 5.3% by mass, a lipid corresponding to this is incorporated into the powdered chocolate. Further, in the case where powdered milk is blended into the powdered chocolate, since the lipid content in the powdered milk is approximately 26.2% by mass, a lipid corresponding to this is incorporated into the powdered chocolate.

The total content of all lipids in the powdered chocolate is preferably 30 to 99% by mass, more preferably 40 to 95% by mass, and furthermore preferably 55 to 950% by mass, provided that the total mass of the finally obtained powdered chocolate containing the powdered fat and/or oil composition of the present invention is 100% by mass.

<Protein Incorporated in Powdered Cholocate>

The "protein" of the present invention is not particularly limited, as long as it contains a peptide larger than eight amino acids. Examples thereof include corn glutens, wheat glutens, soybean proteins, wheat proteins, milk proteins, whey proteins, animal proteins (including collagens) obtained from edible meats or fish meats, egg whites, yolks, and the like. These proteins are preferably processed into a powder form. Particularly, when utilized as a ketogenic diet, human essential amino acids, that is, lysine, leucine, methionine, and cysteine, are preferably incorporated.

Note that, in the present invention, in the case where the ketone ratio and ketone index described above are calculated, proteins derived from the raw materials other than the protein to be blended are also included in the calculation. For example, in the case where a cocoa powder is blended into the powdered chocolate, since the protein content in the cocoa powder is approximately 20% by mass, a protein corresponding to this is incorporated into the powdered chocolate. Moreover, in the case where a matcha powder is blended into the powdered chocolate, since the protein content in the matcha powder is approximately 30.6% by mass, a protein corresponding to this is incorporated into the powdered chocolate. Further, in the case where powdered milk is blended into the powdered chocolate, since the protein content in the powdered milk is approximately 25.5% by mass, a protein corresponding to this is incorporated into the powdered chocolate.

A total content of all proteins in the powdered chocolate is preferably 0 to 40% by mass, more preferably 0 to 35% by mass, and furthermore preferably 0 to 25% by mass, provided that the total mass of the finally obtained powdered chocolate containing the powdered fat and/or oil composition of the present invention is 100% by mass.

<Saccharide Incorporated in Powdered Chocolate>

The "saccharide" of the present invention is not particularly limited. Examples thereof include glucose, dextrin, lactose, sucrose (sugar), galactose, ribose, trehalose, starches, processed starches, starch syrups, and the like. These saccharides are preferably processed into a powder form. In the present invention, to impart chocolate-like flavor and mouthfeel, it is preferable to use a powder of sucrose (sugar) or the like, that is, powdered sugar.

Note that, in the present invention, in the case where the ketone ratio and ketone index described above are calculated, saccharides derived from the raw materials other than the saccharide to be blended are also included in the calculation. For example, in the case where a cocoa powder is blended into the powdered chocolate, since the saccharide content in the cocoa powder is approximately 44.5% by mass, a saccharide corresponding to this is incorporated into the powdered chocolate. Moreover, in the case where a matcha powder is blended into the powdered chocolate, since the saccharide content in the matcha powder is approximately 38.5% by mass, a saccharide corresponding to this is incorporated into the powdered chocolate. Further, in the case where powdered milk is blended into the powdered chocolate, since the saccharide content in the powdered milk is approximately 39.3% by mass, a saccharide corresponding to this is incorporated into the powdered chocolate.

A total content of all saccharides in the powdered chocolate is preferably 1 to 30% by mass, more preferably 5 to 25% by mass, and furthermore preferably 5 to 20% by mass, provided that the total mass of the finally obtained powdered chocolate containing the powdered fat and/or oil composition of the present invention is 100% by mass.

<Other Ingredients Incorporated in Powdered Chocolate>

The powdered chocolate of the present invention can optionally contain other raw materials, which are generally used in producing chocolates, than the above-described chocolate raw materials. For example, it is possible to use an antioxidant, a preservative, a pH adjuster, a coloring agent, a sweetener, a flavoring, an emulsifier, a spice, a food material such as a fruit or a vegetable, or the like. These are preferably in a powder form. The content of these other ingredients can be any amount, as long as the effects of the present invention are not impaired. Particularly, in the present invention, in the case where the powdered chocolate is produced at the ratio (mass ratio) of the lipid to the total of the protein and the saccharide being 2.0 or more, it is particularly preferable to use a sweetener and/or a flavoring in order to restrict the amount of the saccharide used and to improve the flavor.

<Method for Producing Powder Chocolate>

The powdered chocolate of the present invention can be easily produced by simply mixing together the above-described chocolate raw materials (such as the powdered fat and/or oil composition, a flavoring substance, a lipid, a saccharide, a protein, or other ingredients), unlike conventional methods. This is because a powdered fat and/or oil composition constituted of 100% fat and/or oil and having a low melting point, which has never existed, is obtained. This makes it possible to easily produce a variety of foods including the powdered chocolate. Among these, for example, a high-lipid ketogenic food (ketogenic diet) can also be easily produced. Note that, as will be described later, existing powdered fats and/or oils constituted of 100% fats and/or oils generally have high melting points, and powdered chocolates cannot be produced using such powdered fats and/or oils. However, a powdered chocolate can be produced, for example, by adding a flavoring substance such as a cocoa powder, a saccharide such as sugar, and further, as necessary, a flavoring and a sweetener to the powdered fat and/or oil composition of the present invention, and uniformly mixing together. The mixing can be easily performed by hand using a spatula or the like. Nevertheless, for example, for the mass production, the chocolate raw materials can also be mixed together by using a machine such as a V blender, a Nauta mixer, a Henshel mixer, or a fluidized-bed mixer.

<Food or Drink Containing Powdered Chocolate>

Further, the present invention also includes any food or drink containing the powdered chocolate of the present invention. Examples thereof include: cakes coated with the powdered chocolate of the present invention; bakery products obtained by kneading the powdered chocolate of the present invention into dough, followed by baking; drinks in which the powdered chocolate of the present invention is dissolved in milk; and the like. Since the powdered chocolate of the present invention adheres well to foods, it is possible to impart a combination of tastes to a variety of foods by the application or coating with the powdered chocolate of the present invention.

<Ketogenic Diet Therapy>

A "ketogenic diet therapy" has been developed to mimic a fasting state without decreasing calories, and has been often used to treat human epilepsy. Although the mechanism of how a ketogenic diet therapy is effective in the epilepsy treatment is still unknown, the phenomenon has been known from a far past (5th century BC). For example, it has been believed according to a certain theory that if saccharides and proteins are restricted, the insulin signal transduction is decreased, consequently promoting fatty acid utilization and inducing ketone body production. Thereby, the concentration of ketone bodies in the blood is increased, so that ketosis can be maintained for a long period. This is a characteristic of a ketogenic diet therapy.
Since a large amount of lipids are provided in a ketogenic diet therapy, sufficient calories are obtained. However, the low insulin signal transduction forms a certain fasting state. Moreover, the low insulin signal transduction increases the activities of lipoprotein lipases in non-adipose tissues, and stimulates the intake of free fatty acids and the fatty acid oxidation in muscle and liver tissues. The fatty acid oxidation in the liver produces a high level of acetyl-CoA, which is utilized in the ketone body production. Since the liver has no enzyme for metabolizing ketone bodies, ketone bodies are released in the blood and utilized in peripheral tissue cells. Further, when the concentration of ketone bodies in the blood is increased, the glucose utilization is decreased, so that the low state of the insulin signal transduction persists.
Such a "ketogenic diet therapy" enables treatments against certain diseases. Examples of candidates therefor include treatments against seizure of idiopathic epilepsy, a decrease in body weight, psychological problems such as obsessive-compulsive disorder and separation anxiety, muscle metabolisms such as fatigue and weakening, type 2 diabetes due to insulin secretion or deficiency disorder, and other similar diseases. Recently, it has been found that ketone bodies serve as an energy source for brain activities in place of saccharides, and are also possibly effective in treatments against certain neurodegenerative diseases, for example, Parkinson's disease, Alzheimer's disease, and the like. Moreover, since cancer cells utilize a large amount of saccharides as an energy source, there has also been proposed a cancer treatment method of starving cancer cells, which cannot effectively utilize ketone bodies, by eating saccharide-restrictive diets to thereby utilize ketone bodies as a main energy source.

Thus, the "powdered chocolate" of the present invention can be effective in improving the seizure frequency of epilepsy patients and relieving the severity of the seizures. Particularly, the "powdered chocolate" is believed to be effective for epilepsy patients having no congenital metabolic disorders. It is believed that the "powdered chocolate" also has a low possibility of causing undesirable side effects such as growth retardation, metabolic acidosis, a decrease in immune function, kidney problems, and constipation.

Moreover, the "powdered chocolate" can be effectively utilized as one component of diets applied to body-weight adjustment and body-weight control plans for adults having a BMI exceeding 25 and other obese persons, particularly, obese persons suffering from metabolic syndrome or insulin resistance. Further, it would be also effective as a therapeutic food for patients suffering from senile dementia or Alzheimer's dementia, and patients suffering from certain cancers. In addition, it is also expected to exhibit effects for preventing these diseases.

[Examples]

Next, the present invention will be described in further details based on Examples and Comparative Example. However, the present invention is not limited to these at all. Moreover, in the following description, "%" means % by mass, unless otherwise noted.

<Raw Material Fat and/or Oil>

(1) Powdered fat and/or oil composition A (melting point: approximately 28°C):

[x = 10, y = 18, tempering process]

Into a 500-mL four-necked flask equipped with a stirrer, a thermometer, a nitrogen gas inlet tube, and a water separator, 44.1g (0.479 mol) of glycerin (manufactured by Sakamoto Yakuhin Kogyo Co., Ltd.), 25.9 g (0.091 mol) of stearic acid (Palmac 98-18 (manufactured by Acidchem International Sdn Bhd)), and 266.0 g (1.544 mol) of capric acid (Palmac 99-10 (manufactured by Acidchem International Sdn Bhd)) were placed. These were reacted under a nitrogen stream at a temperature of 250°C for 15 hours. Excessive capric acid was distilled off at 190°C under a reduced pressure, followed by bleaching, filtration, and deodorization. Thus, 245 g of a pale yellow liquid reaction product at 50°C was obtained (XXX type: 80.6% by mass, X2Y type: 17.3% by mass). Raw material fats (XXX type: 94.0% by mass, X2Y type: 5.2% by mass) were prepared by mixing 60 g of the obtained reaction product with 140 g of tricaprin (manufactured by The Nisshin OilliO Group, Ltd.) . The raw material fats were maintained at 80°C for 0.5 hours and completely melted. The resultant was cooled in a thermostatic chamber at 10°C for 1 hour, and then left standing in the thermostatic chamber at 20°C for 12 hours. A solid having voids with an increased volume was formed and then loosened. Thus, a powdered crystalline composition was obtained (loose bulk density: 0.3 g/cm$^3$, average particle diameter of 116 $\mu$m) . The powdered fat and/or oil composition thus obtained was used in the following Examples.

Here, the loose bulk density was calculated from a bulk specific gravity measured based on JIS K-6720 (or ISO 1060-1 and 2) by using a bulk specific gravity measuring device manufactured by Kuramochi Kagaku Kikai Seisakusho Co. Specifically, 120 mL of the sample was let fall toward a receiver (a 100-mL cylindrical container with an inner diameter of 40 mm $\times$ a height of 85 mm) from a height position 38 mm above an upper opening of the receiver. Subsequently, the sample protruding from the receiver was slid off, and the mass (A g) of the sample corresponding to the internal capacity (100 mL) of the receiver was weighed. The loose bulk density was determined from the following formula.

$$\texttt{Loose bulk density (g/mL) = A (g)/100 (mL)}$$

The measurement was repeated three times to obtain the average as the measurement value.

Here, the average particle diameter was measured based on laser diffraction/scattering methods (ISO133201, ISO9276-1) using Microtrac MT3300ExII manufactured by Nikkiso Co., Ltd.).

(2) Fat powder (melting point: 67.8°C)

A fat powder (Spray Fat PM: manufactured by RIKEN VITAMIN CO., LTD.)

<Other Raw Materials>

Used in Examples described later were commercially-available: a cocoa powder (Cocoa Powder DF500: manufactured by Daito Cacao Co., Ltd.), powdered sugar (MGP Huntou: manufactured by Tokukura Corporation), a chocolate flavoring (*Chocoreito Kouton* IL36882: manufactured by Ogawa & Co., Ltd.), a sweetener A (*Mirasee* NK: manufactured by DSP Gokyo Food & Chemical Co., Ltd.), a sweetener B (Sucralose: manufactured by San-Ei Gen F. F. I., Inc.), a matcha powder (Kyoto *Matcha Powder* (*Wakakusa*) : manufactured by Cuoca Planning Co., Ltd.), a matcha flavor (*Matcha Kouton* IL36883 : manufactured by Ogawa & Co., Ltd.), and powdered milk (whole milk powder: manufactured by Yotsuba Milk Products Co., Ltd.).

[Example 1]

<Production of Powdered Chocolate (Plain)>

According to the formulas in Table 1 below, a powdered chocolate (plain) of Example 1 was produced. More specifically, the cocoa powder, the powdered sugar, the chocolate flavoring, and the sweeteners A and B were added to the powdered fat and/or oil composition put in a container, and mixed together using a spatula. Thus, a powdered chocolate (plain) was prepared. Note that the following cocoa powder contained 11% by mass of a lipid, 20% by mass of a protein, and 44.5% by mass of a saccharide.

| [Table 1] Powdered chocolate (plain) formula, nutritional ingredients, and sensory evaluation | | | | | |
|---|---|---|---|---|---|
| | Example 1 | | | | |
| | Blended raw materials (g) | Lipid content (g) | Protein content (g) | Saccharide content (g) | Energy (kcal) |
| Powdered fat and/or oil, composition | 74.00 | 74.0 | - | - | 666.0 |
| Cocoa powder | 20.00 | 2.2 | 4.0 | 8.9 | 40.0 |
| Powdered sugar | 5.05 | - | - | 5.1 | 19.5 |
| Chocolate flavoring | 0.75 | - | - | - | - |
| Sweetener A | 0.15 | - | - | - | - |
| Sweetener B | 0.05 | - | - | - | - |
| Raw material total | 100.00 | 76.2 | 4.0 | 14.0 | 725.5 |
| Ketone ratio | 4.2 | | | | |
| Ketone index | 2.9 | | | | |
| oily taste | ○ | | | | |
| Ease of eating | ○ | | | | |
| Palatability | ○ | | | | |
| Cooling Sensation | ○ | | | | |

<Evaluation of Powdered Chocolate>

The powdered chocolate (plain) of Example 1 produced as described above was subjected to a sensory evaluation according to the following evaluation methods.

<Powdered Chocolate Evaluation Methods>

(1) Oily taste evaluation method

A comprehensive evaluation was conducted by five skilled panelists according to the following criteria.

o: not oily
Δ: slightly oily
×: oily

(2) Ease-of-eating evaluation method

A comprehensive evaluation was conducted by five skilled panelists according to the following criteria.

○: easy to eat
Δ: slightly hard to eat
×: hard to eat

(3) Palatability evaluation method

A comprehensive evaluation was conducted by five skilled panelists according to the following criteria.

○: having favorable flavor and melt-in-the-mouth, and delicious

Δ: lacking flavor and melt-in-the-mouth, but somewhat delicious

×: poor in flavor and melt-in-the-mouth, and not delicious

(4) Cooling-sensation evaluation method

A comprehensive evaluation was conducted by five skilled panelists according to the following criteria.

○: having a cooling sensation in the mouth.
Δ: slightly having a cooling sensation in the mouth.
×: having no cooling sensation in the mouth.

As apparent from the result of Table 1, the powdered chocolate (Example 1) produced by using the powdered fat and/or oil composition of the present invention was one that can be evaluated as non-oily, easy to eat, also having favorable chocolate flavor and melt-in-the-mouth, and delicious, even though the ratio (mass ratio) of the lipid to the total of the protein and the saccharide was 4.0 or more and quite high. Moreover, the powdered chocolate had a unique cooling sensation, and was quite highly preferable. Further, since this powdered chocolate can be produced simply by mixing the raw materials together, anyone can produce the powdered chocolate at low cost, and the industrial applicability is quite high. Furthermore, the palatability is comparable to those of normal powdered chocolates (rather the powdered chocolate had a cooling sensation and was highly preferable). Accordingly, the powdered chocolate not only can substitute for conventional powdered chocolates but also can be utilized as, for example, a ketogenic diet without getting tired of continuous eating for a long period.

[Example 2]

<Production of Powdered Chocolate (Matcha)>

According to the formulas in Table 2 below, a powdered chocolate (matcha) of Example 2 was produced. More specifically, the matcha powder, the powdered milk, the powdered sugar, the matcha flavor, and the sweeteners A and B were added to the powdered fat and/or oil composition put in a container, and mixed together using a spatula. Thus, a powdered chocolate (matcha) was prepared. Note that the matcha powder contained 5.3% by mass of a lipid and 30.6% by mass of a protein. In addition, the powdered milk contained 26.2% by mass of a lipid, 25.5% by mass of a protein, and 39.3% by mass of a saccharide. Moreover, the values of the lipid content, the protein content, and the saccharide content were rounded off to one decimal place.

| [Table 2] Powdered chocolate (matcha) formula, nutritional ingredients, and sensory evaluation | | | | | |
|---|---|---|---|---|---|
| | Example 2 | | | | |
| | Blended raw materials (g) | Lipid content (g) | Protein content (g) | Saccharide content (g) | Energy (kcal) |
| Powdered fat and/or oil, composition | 75.00 | 75.0 | - | - | 675.0 |
| Matcha powder | 10.00 | 0.5 | 3.1 | - | 32.4 |
| Powdered milk | 3.00 | 0.8 | 0.8 | 1.2 | 15.0 |
| Powdered sugar | 11.05 | - | - | 11.1 | 42.8 |
| Matcha flavor | 0.75 | - | - | - | - |
| Sweetener A | 0.15 | - | - | - | - |
| Sweetener B | 0.05 | - | - | - | - |
| Raw material total | 100.00 | 76.3 | 3.9 | 12.3 | 765.2 |
| Ketone ratio | 4.7 | | | | |
| Ketone index | 3.2 | | | | |
| Oily taste | ○ | | | | |
| Ease of eating | ○ | | | | |
| Palatability | ○ | | | | |
| Cooling sensation | ○ | | | | |

<Evaluation of Powdered Chocolate>

The powdered chocolate (matcha) of Example 2 produced as described above was subjected to a sensory evaluation according to the evaluation methods described above in Example 1.

As apparent from the result of Table 2, the powdered chocolate (Example 2) produced by using the powdered fat and/or oil composition of the present invention was one that can be evaluated as non-oily, easy to eat, also having favorable matcha flavor and melt-in-the-mouth, and delicious, even though the ratio (mass ratio) of the lipid to the total of the protein and the saccharide was 4.0 or more and quite high. Particularly, the flavor of the matcha material was strongly tasted, so that the powdered chocolate adds a matcha flavor to various foods which can be widely utilized as foods having a combination of tastes. Further, because of the unique cooling sensation, the powdered chocolate has a possibility of meeting new needs of consumers, such as by making powdered chocolates for summer, suppressing a decrease in the demand in summer.

[Comparative Example 1]

<Production of Powdered Chocolate (Plain)>

According to the formulas in Table 3 below, a powdered chocolate (plain) of Comparative Example 1 was produced. More specifically, the cocoa powder, the powdered sugar, the chocolate flavoring, and the sweeteners A and B were added into a container in which the aforementioned fat powder had been put in place of the powdered fat and/or oil composition of Example 1, and mixed together using a spatula. Thus, a powdered chocolate (plain) was prepared. Note that the cocoa powder contained 11% by mass of a lipid, 20% by mass of a protein, and 44.5% by mass of a saccharide.

| [Table 3] Powdered chocolate (plain) formula, nutritional ingredients, and sensory evaluation | | | | | |
|---|---|---|---|---|---|
| | Comparative Example 1 | | | | |
| | Blended raw materials (g) | Lipid content (g) | Protein content (g) | Saccharide content (g) | Energy (kcal) |
| Fat powder | 74.00 | 74.0 | - | - | 666.0 |
| Cocoa powder | 20.00 | 2.2 | 4.0 | 8.9 | 40.0 |
| Powdered sugar | 5.05 | - | - | 5.1 | 19.5 |
| Chocolate flavoring | 0.75 | - | - | - | - |
| Sweetener A | 0.15 | - | - | - | - |
| Sweetener B | 0.05 | - | - | - | - |
| Raw material total | 100.00 | 76.2 | 4.0 | 14.0 | 725.5 |
| Ketone ratio | 4.2 | | | | |
| Ketone index | 2.9 | | | | |
| Oily taste | ✕ | | | | |
| Ease of eating | ✕ | | | | |
| Palatability | ✕ | | | | |
| Cooling sensation | ✕ | | | | |

<Evaluation of Powdered Chocolate>

The powdered chocolate (plain) of Comparative Example 1 produced as described above was subjected to a sensory evaluation according to the evaluation methods described above in Example 1.

As shown in the result of Table 3, when the above-described fat powder was used for the production in place of the powdered fat and/or oil composition, the powdered chocolate (plain) of Comparative Example 1 had a gritty mouthfeel and also a strong oily taste, hard to eat and not delicious. In conclusion, Comparative Example 1 was one that can be hardly said as a powdered chocolate. Moreover, unlike the case of using the powdered fat and/or oil composition, the use of the fat powder imparted no unique cooling sensation.

**Claims**

1. A powdered chocolate comprising a fat and/or oil composition in a powder form satisfying the following condition (a), wherein

   (a) the fat and/or oil composition comprises:

   65 to 99% by mass of a XXX triglyceride having fatty acid residues X, each with x carbon atoms, at positions 1 to 3; and
   35 to 1% by mass of one or more types of X2Y triglycerides each having a fatty acid residue Y with y carbon atoms in place of one of the fatty acid residues X of the XXX triglyceride, provided that a total triglyceride content is 100% by mass,

   x number of carbon atoms is an integer selected from 8 to 20, and
   y number of carbon atoms is each independently an integer selected from x+2 to x+12 and satisfying $y \leq 22$.

2. The powdered chocolate according to claim 1, comprising:

   80 to 99% by mass of the XXX triglyceride; and
   20 to 1% by mass of the one or more types of X2Y triglycerides in total.

3. The powdered chocolate according to claim 1 or 2, wherein
the x is an integer selected from 10 to 18, and
the y is each independently an integer selected from x+2 to x+10 and satisfying y≤22.

4. The powdered chocolate according to any one of claims 1 to 3, wherein
the x is an integer selected from 10 to 12, and
the y is each independently an integer selected from x+4 to x+8 and satisfying y≤22.

5. The powdered chocolate according to any one of claims 1 to 4, which has a loose bulk density of 0.1 to 0.6 g/cm$^3$.

6. The powdered chocolate according to any one of claims 1 to 5, wherein
the powdered chocolate comprises a lipid, a protein, and a saccharide,
a ratio (mass ratio) of the lipid to a total of the protein and the saccharide is 2.0 or more, and
the fat and/or oil composition in the powder form satisfying the condition (a) is incorporated as the lipid and accounts for 50% by mass or more of the lipid.

7. The powdered chocolate according to claim 6, wherein a total energy per 100 g (dry mass) of the powdered chocolate is 500 to 850 kilocalories.

8. The powdered chocolate according to claim 6 or 7, wherein a ketone index (Woodyatt's formula) of the powdered chocolate is 1.0 to 4.0.

9. The powdered chocolate according to any one of claims 1 to 8, comprising at least one flavoring substance selected from the group consisting of a cocoa powder, matcha, and powdered milk.

10. The powdered chocolate according to claim 9, further comprising a flavoring and/or a sweetener.

11. A food or drink comprising the powdered chocolate according to any one of claims 1 to 10.

12. A method for producing a powdered chocolate, comprising blending the fat and/or oil composition in the powder form according to any one of claims 1 to 5 into a powdered chocolate.

13. The method for producing a powdered chocolate according to claim 12, comprising blending the fat and/or oil composition in the powder form such that a content thereof in the powdered chocolate is 30 to 96% by mass.

14. The method for producing a powdered chocolate according to claim 12 or 13, comprising blending at least one flavoring substance selected from the group consisting of a cocoa powder, matcha, and powdered milk.

15. The method for producing a powdered chocolate according to claim 14, further comprising blending a flavoring and/or a sweetener.

## INTERNATIONAL SEARCH REPORT

| International application No. |
| --- |
| PCT/JP2016/055421 |

### A. CLASSIFICATION OF SUBJECT MATTER
*A23G1/00*(2006.01)i, *A23D9/00*(2006.01)i, *A23G1/30*(2006.01)i

According to International Patent Classification (IPC) or to both national classification and IPC

### B. FIELDS SEARCHED

Minimum documentation searched (classification system followed by classification symbols)
A23G1/00, A23D9/00, A23G1/30

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)
JSTPlus/JMEDPlus/JST7580(JDreamIII), CAplus/MEDLINE/EMBASE/BIOSIS(STN)

### C. DOCUMENTS CONSIDERED TO BE RELEVANT

| Category* | Citation of document, with indication, where appropriate, of the relevant passages | Relevant to claim No. |
| --- | --- | --- |
| A | WO 2014/087724 A1 (Fuji Oil Co., Ltd.), 12 June 2014 (12.06.2014), claims & JP 5601432 B | 1–15 |
| A | JP 08-205773 A (Meiji Seika Kaisha, Ltd.), 13 August 1996 (13.08.1996), claims (Family: none) | 1–15 |
| A | US 3796816 A (HASMAN, John Michael), 12 March 1974 (12.03.1974), claims (Family: none) | 1–15 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 08 April 2016 (08.04.16) | 10 May 2016 (10.05.16) |

| Name and mailing address of the ISA/ Japan Patent Office 3-4-3,Kasumigaseki,Chiyoda-ku, Tokyo 100-8915,Japan | Authorized officer Telephone No. |
| --- | --- |

Form PCT/ISA/210 (second sheet) (January 2015)

**INTERNATIONAL SEARCH REPORT**

| International application No. |
| --- |
| PCT/JP2016/055421 |

C (Continuation).   DOCUMENTS CONSIDERED TO BE RELEVANT

| Category* | Citation of document, with indication, where appropriate, of the relevant passages | Relevant to claim No. |
| --- | --- | --- |
| P,X | WO 2016/013582 A1  (The Nisshin Oillio Group, Ltd.), 28 January 2016 (28.01.2016), claims (Family: none) | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3083967 B
- JP 3817450 B
- JP 5501764 B
- JP 2015070850 W
- JP 2014149168 A

**Non-patent literature cited in the description**

- **HIROSHI MARUYAMA et al.** Book of Ketogenic Diet. Dai-Ichi Shuppan Co., Ltd, 2010, 4